# EUROPEAN PATENT APPLICATION

(11) **EP 2 752 570 A1**
(43) Date of publication of application: **09.07.2014**
(21) Application number: 12873621.2
(22) Date of filing: 06.04.2012
(51) Int. Cl.: F02D 17/00, F02D 29/02

(54) **DEVICE FOR CONTROLLING VEHICLE ENGINE STARTING**

(71) Applicant: Toyota Jidosha Kabushiki Kaisha, Toyota-shi, Aichi 471-8571 (JP)
(72) Inventor: KOJIMA Susumu, Toyota-shi Aichi 471-8571 (JP); NAKANISHI Naoki, Toyota-shi Aichi 471-8571 (JP); IDESHIO Yukihiko, Toyota-shi Aichi 471-8571 (JP); SUGIMOTO Tomojiro, Toyota-shi Aichi 471-8571 (JP)
(74) Representative: Winter, Brandl, Fürniss, Hübner, Röss, Kaiser, Polte - Partnerschaft
(86) International application number: PCT/JP2012/059593
(87) International publication number: WO 2013/150655

(57) **Abstract**

When a direct injection engine 12 is started from a TDC engine stop state, in which a first cylinder K1 of a plurality of cylinders is in an expansion stroke with a second cylinder K2 next to the first cylinder K1 in an ignition order located at a compression TDC, an electronic control device 70 starts rotation of the direct injection engine 12 and directly injects fuel into the second cylinder K2 and ignites the fuel while a piston 110 of the second cylinder K2 is moving away from the compression TDC toward a bottom dead center in a first expansion stroke in the second cylinder K2 after the start of the rotation. Therefore, at the beginning of the rotation start when the direct injection engine 12 is started, a negative pressure is reduced in the second cylinder K2 entering the expansion stroke from the compression TDC and a torque rotating the direct injection engine 12 is generated at the same time by an explosion in the second cylinder K2. Therefore, an engine rotation speed NE can rapidly be raised to ensure good startability of the direct injection engine 12.

## Description

### TECHNICAL FIELD

The present invention relates to an engine start control device of a vehicle including a direct injection engine.

### BACKGROUND ART

A vehicle is known that includes a direct injection engine directly injecting fuel into a cylinder as a drive power source for running. For example, this corresponds to a vehicle described in Patent Document 1. An engine start control device of the vehicle of Patent Document 1 directly injects fuel into a cylinder in an expansion stroke in a stop state of the direct injection engine and ignites the fuel to launch engine rotation, thereby performing so-called ignition start for starting the direct injection engine. However, if a piston stop position of the cylinder in the expansion stroke is within a range precluding the ignition start, a starter motor assists the rise of the rotation speed for starting the direct injection engine.

### PRIOR ART DOCUMENTS

### Patent Documents

Patent Document 1: Japanese Laid-Open Patent Publication No. 2004-301080
Patent Document 2: Japanese Laid-Open Patent Publication No. 2004-316455

### SUMMARY OF THE INVENTION

### Problem to Be Solved by the Invention

If the direct injection engine is stopped, a crank angle at the time of the engine stop is not necessarily a preferred angle for the next engine start and the engine may stop in the vicinity of a top dead center at the time of termination of a compression stroke, i. e., a compression TDC (top dead center) with a probability of about 5 to 10 %, for example. If the direct injection engine stops with a piston position located at the compression TDC in any cylinder, when the direct injection engine in the stop state starts rotating, a negative pressure is generated in the cylinder having a piston beginning to go down from the compression TDC even though the start of the direct injection engine is assisted by the starter motor, for example. As a result, a problem occurs that the negative pressure acts as rotation resistance to deteriorate the startability of the direct injection engine. Such a problem is not known.

The present invention was conceived in view of the situations and it is therefore an object of the present invention to provide a vehicle engine start control device capable of ensuring good startability in a vehicle including a direct injection engine as a drive power source for running when starting the direct injection engine having any cylinder of a plurality of cylinders stopped in the vicinity of a top dead center. Means for Solving the Problem

To achieve the object, the first aspect of the invention provides a vehicle engine start control device (a) in a vehicle including a direct injection engine directly injecting fuel into a cylinder as a drive power source for running, wherein (b) when the direct injection engine is started from a stop state of the direct injection engine in which a first cylinder of a plurality of cylinders is in an expansion stroke while a second cylinder next to the first cylinder in an ignition order is located at a top dead center, rotation of the direct injection engine is started, and while a piston of the second cylinder is moving away from the top dead center toward a bottom dead center in a first expansion stroke in the second cylinder after the start of the rotation, fuel is directly injected into the second cylinder and ignited.

### Effects of the Invention

Consequently, at the beginning of the rotation start when the direct injection engine is started, a negative pressure is reduced in the second cylinder entering the expansion stroke from the top dead center and a torque rotating the direct injection engine is generated at the same time by an explosion in the second cylinder. Therefore, as compared to the case without a fuel injection or ignition in the second cylinder at the beginning of the rotation start, an engine rotation speed can rapidly be raised to ensure good startability of the direct injection engine. If the fuel injection and ignition are performed at the top dead center of the second cylinder, the explosion is difficult to occur in the second cylinder due to an excessively small volume of a combustion chamber of the second cylinder etc.; however, since the fuel injection and ignition are performed while the piston is moving away from the top dead center toward the bottom dead center, the occurrence of explosion in the second cylinder is advantageously facilitated as compared to the fuel injection and ignition at the top dead center.

The second aspect of the invention provides the vehicle engine start control device recited in the first aspect of the invention, wherein (a) each piston included in the direct injection engine includes a concave portion opened toward a combustion chamber in a piston top portion, and wherein (b) the fuel is injected into the second cylinder toward the concave portion. Consequently, since the concave portion can be utilized to form easily-ignited rich air-fuel mixture around an ignition device with the injected fuel moderately dispersed, an ignition failure is avoided in the second cylinder and the occurrence of explosion is facilitated as compared to the case of employing a piston without the concave portion.

The third aspect of the invention provides the vehicle engine start control device recited in the first or second aspect of the invention, wherein the rotation of the direct injection engine is started by directly injecting fuel into the first cylinder and igniting the fuel in a stop state of the direct injection engine. Consequently, the direct injection engine can be started without using the starter motor.

The fourth aspect of the invention provides the vehicle engine start control device recited in any one of the first to third aspects of the invention, wherein the direct injection engine has a plurality of cylinders equal to or greater than seven cylinders. In the case of a four-cycle direct injection engine with seven or more cylinders, for example, a direct injection engine with 8 cylinders, 12 cylinders, etc., when the direct injection engine is started while the predetermined cylinder, i.e., the second cylinder is at the top dead center, the first cylinder in the expansion stroke exists that precedes the second cylinder in the ignition order and in which an exhaust valve is not opened. Therefore, by directly injecting fuel into the first cylinder and igniting the fuel in the stop state of the direct injection engine, the engine rotation can be launched to start the direct injection engine.

### BRIEF DESCRIPTION OF THE DRAWINGS

Fig. 1 is a diagram of a configuration including a schematic for explaining a main portion of a mechanical configuration of a vehicle to which the present invention is preferably applied, and a functional block diagram of a major control function of an electronic control device.
Fig. 2 is a cross-sectional view for explaining a direct injection engine of the vehicle of Fig. 1.
Fig. 3 is a diagram for explaining an order of a four-cycle stroke performed in each of cylinders when the direct injection engine of Fig. 1 is a V-type eight-cylinder engine.
Fig. 4 is a cylinder phase diagram of mutual relationship of phases of four cylinders involved in explosions during one rotation of a crankshaft in the V-type eight-cylinder engine of Fig. 1.
Fig. 5 is a flowchart for explaining a main portion of the control operation of the electronic control device of Fig. 1, i.e., a control operation of restarting the direct injection engine in response to an engine restart request.
Fig. 6 is a cross-sectional view of the direct injection engine of Fig. 1 and a diagram schematically depicting a flow of air-fuel mixture in a combustion chamber when the fuel injection into a second cylinder is performed with the second cylinder of the direct injection engine located at the compression TDC during start of the engine.
Fig. 7 is a cross-sectional view of the direct injection engine of Fig. 1 and a diagram schematically depicting a flow of air-fuel mixture in the combustion chamber when the fuel injection into the second cylinder is performed while the piston is moving away from the compression TDC toward the bottom dead center in the first expansion stroke of the second cylinder of the direct injection engine, specifically, in early phase of the first expansion stroke during start of the engine.

### MODE FOR CARRYING OUT THE INVENTION

Preferably, with regard to a third cylinder following the second cylinder in the ignition order, the vehicle engine start control device directly injects fuel into the third cylinder in the compression stroke and ignites the fuel in the vicinity of a top dead center. Embodiment

An embodiment of the present invention will now be described in detail with reference to the drawings.

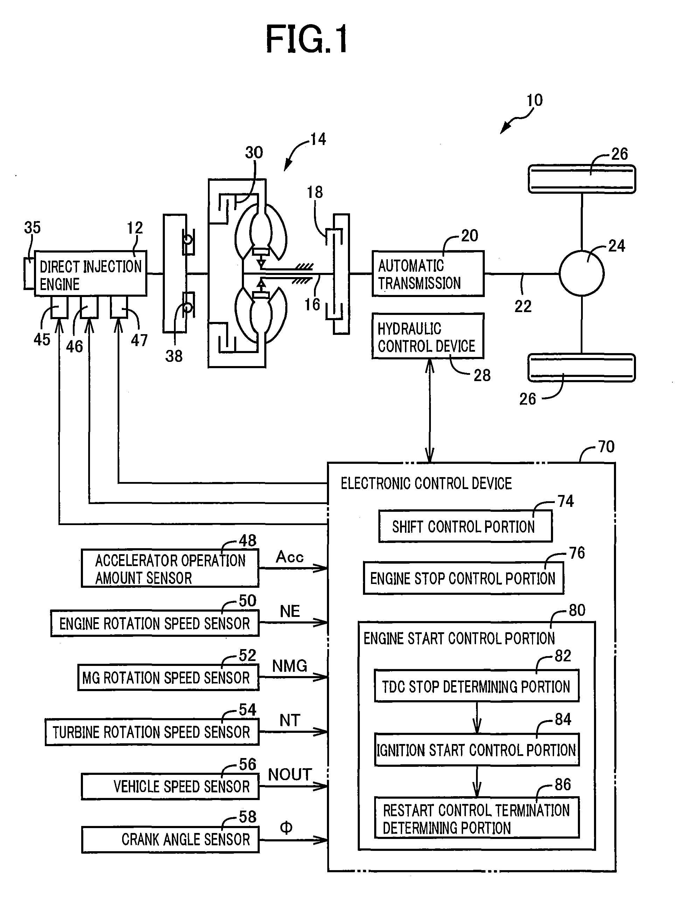

Fig. 1 is a diagram of a general configuration including a schematic of a drive system of a vehicle 10 to which the present invention is preferably applied. The vehicle 10 includes a direct injection engine 12 directly injecting fuel into a cylinder as a drive power source for running. An output of the direct injection engine 12 is transmitted from a torque converter 14 that is a hydraulic power transmission device via a turbine shaft 16 and a C1 clutch 18 to an automatic transmission 20 and further transmitted via an output shaft 22 and a differential gear device 24 to left and right drive wheels 26. The torque converter 14 includes a pump impeller connected via a damper 38 to the direct injection engine 12, a turbine impeller connected to the turbine shaft 16, a stator impeller, and a lockup clutch (L/U clutch) 30 selectively directly coupling the pump impeller and the turbine impeller.

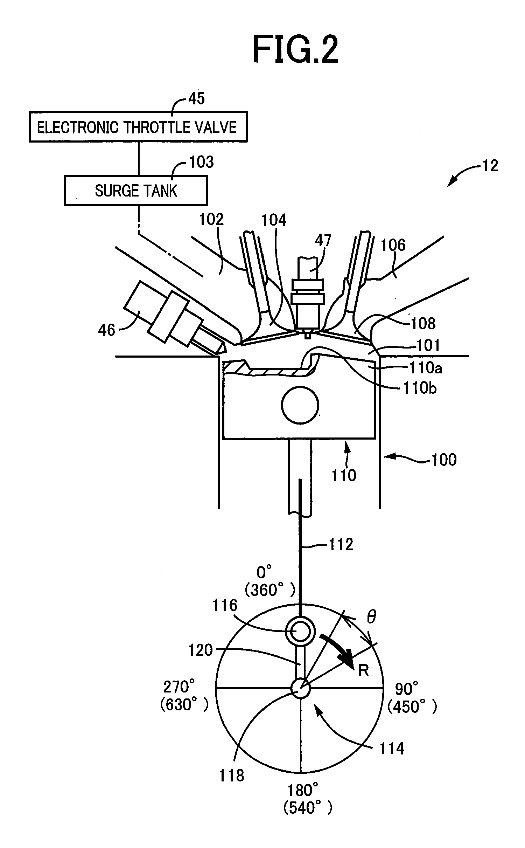

For the direct injection engine 12, a V-type eight-cylinder four-cycle gasoline engine is used in this embodiment and, as specifically depicted in Fig. 2, gasoline is directly injected in a high-pressure particulate state by a fuel injection device 46 into a combustion chamber 101 formed in a cylinder 100. The direct injection engine 12 allows air to flow from an intake passage 102 via an intake valve 104 into the combustion chamber 101 and allows exhaust gas to be discharged via an exhaust valve 108 from an exhaust passage 106 and, when ignition is caused by an ignition device 47 at predetermined timing, air-fuel mixture in the combustion chamber 101 is exploded and combusted to push down a piston 110 to the lower side. The intake passage 102 is connected via a surge tank 103 to an electronic throttle valve 45 acting as an intake air amount adjusting valve so as to control an amount of intake air flowing from the intake passage 102 into the combustion chamber 101, and thus engine output, in accordance with an opening degree of the electronic throttle valve 45 (throttle valve opening degree). As depicted in Fig. 2, the piston 110 includes a piston top portion 110a defined as an end portion on the combustion chamber 101 side and forming a portion of the combustion chamber 101, and the piston top portion 110a includes a concave portion 110b, i.e., a cavity, opened toward the combustion chamber 101. The piston 110 is axially slidably fitted into the cylinder 100 and is relatively rotatably coupled via a connecting rod 112 to a crank pin 116 of a crankshaft 114, and the crankshaft 114 is rotationally driven as indicated by an arrow R in accordance with linear reciprocating movement of the piston 110. The crankshaft 114 is rotatably supported by a bearing in a journal portion 118 and integrally includes a crank arm 120 connecting the journal portion 118 and the crank pin 116. A shape such as a depth of the concave portion 110b disposed in the piston 110 is defined such that the fuel injected from the fuel injection device 46 during normal drive of the direct injection engine 12 is reflected in the concave portion 110b and forms easily-ignited rich air-fuel mixture with the fuel moderately dispersed around the ignition device 47 so as to achieve a good explosion. During normal drive of the direct injection engine 12, the fuel is injected in a compression stroke of each of the cylinders 100.

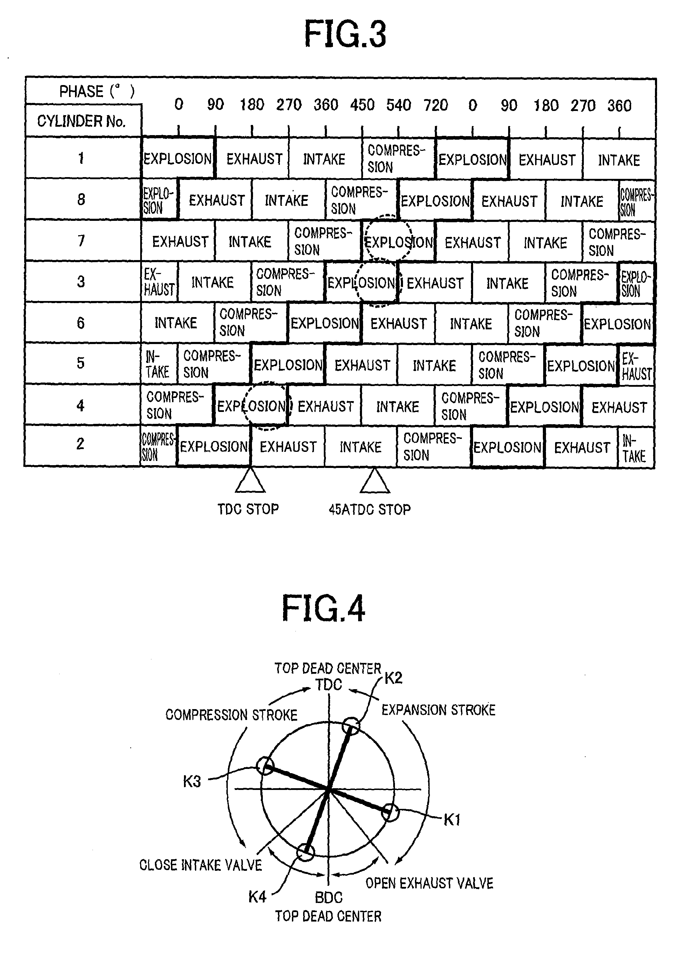

The direct injection engine 12 as described above performs four strokes, i.e., an intake stroke, a compression stroke, an expansion (explosion) stroke, and an exhaust stroke, per two rotations (720 degrees) of the crankshaft 114 for one cylinder and this is repeated to allow the crankshaft 114 to continuously rotate. The pistons 110 of the eight cylinders 100 are configured to have the respective crank angles shifted by 90 degrees from each other and, in other words, the positions of the crank pins 116 of the crankshafts 114 are projected in directions shifted by 90 degrees from each other and, each time the crankshaft 114 rotates by 90 degrees, the eight cylinders 100 are exploded and combusted in a preset ignition order described in Fig. 3, for example, thereby continuously generating a rotation torque. When the crankshaft 114 rotates by a predetermined angle from a top dead center after the compression stroke (compression TDC) and the piston 110 is stopped within a predetermined angle range θ in the expansion stroke with both the intake valve 104 and the exhaust valve 108 closed, gasoline can be injected by the fuel injection device 46 into the cylinder 100 (into the combustion chamber 101) and ignited by the ignition device 47, thereby exploding and combusting the air-fuel mixture in the cylinder 100 to perform an ignition start for rising an engine rotation speed. If friction between the portions of the direct injection engine 12 is small, the direct injection engine 12 may be started by the ignition start only and, even if the friction is large, the ignition start can reduce a start assist torque at the time of start with cranking of the crankshaft 114 and, therefore, a maximum torque of a starter motor 35 generating the start assist torque can be reduced to achieve reductions in size and electric power consumption. When the angle range θ is within a range of, for example, about 30 to 60 degrees in terms of a crank angle CA after the top dead center, relatively large rotation energy can be acquired from the ignition start to reduce or eliminate the start assist torque; however, even when the angle is about 90 degrees, rotation energy can relatively be acquired from the ignition start to reduce or eliminate the start assist torque.

Fig. 3 is a diagram for explaining working strokes corresponding to the crank angle CA of each of the cylinders No. 1 to No. 8 when the direct injection engine 12 is a V-type eight-cylinder engine operating in four cycles. Although the cylinders No. 1 to No. 8 represent mechanical arrangement positions, the ignition order based on the crank angle CA of 0 degrees is an order of the cylinder No. 2, the cylinder No. 4, the cylinder No. 5, the cylinder No. 6, the cylinder No. 3, the cylinder No. 7, the cylinder No. 8, and the cylinder No. 1. For example, assuming that the cylinder No. 4 is a first cylinder K1 in the ignition order, the cylinder No. 5, the cylinder No. 6, and the cylinder No. 3 are a second cylinder K2, a third cylinder K3, and a fourth cylinder K4, respectively. Fig. 4 is a cylinder phase diagram of mutual relationship of phases of four cylinders involved in explosions during one rotation of the crankshaft 114 in a V-type eight-cylinder engine, and the first to fourth cylinders K1 to K4 rotate clockwise while maintaining a 90-degree relationship from each other to sequentially repeat the compression stroke in which intake air is compressed from the closing of the intake valve 104 until the TDC and the explosion stroke in which the piston 110 is pushed down by expansion of exploded gas from the TDC until the opening of the exhaust valve 108. The phase of the first cylinder K1 of Fig. 4 is in the second half of the expansion stroke; the phase of the second cylinder K2 is in the first half of the expansion stroke; the phase of the third cylinder K3 is in the second half of the compression stroke; and the phase of the fourth cylinder K4 is before the start of the compression stroke.

The automatic transmission 20 is a stepped automatic transmission of a planetary gear type etc., having a plurality of gear stages with different gear ratios established in accordance with an engagement/release state of a plurality of hydraulic friction engagement devices (clutches and brakes), and is subjected to shift control by electromagnetic hydraulic control valves, switching valves, etc., disposed in a hydraulic control device 28. The C1 clutch 18 is an input clutch of the automatic transmission 20 functioning as a start clutch engaged at the start of the vehicle, for example, and is subjected to engagement/release control by an electromagnetic linear control valve also in the hydraulic control device 28.

The vehicle 10 as described above is controlled by an electronic control device 70. The electronic control device 70 includes a so-called microcomputer having a CPU, a ROM, a RAM, and an input/output interface and executes signal processes in accordance with programs stored in advance in the ROM, while utilizing a temporary storage function of the RAM. For example, when the direct injection engine 12 is started, the electronic control device 70 acts as a vehicle engine start control device controlling the start of the direct injection engine 12. The electronic control device 70 is supplied with a signal indicative of an operation amount (accelerator operation amount) Acc of an accelerator pedal from an accelerator operation amount sensor 48. The electronic control device 70 is also supplied from an engine rotation speed sensor 50, a turbine rotation speed sensor 54, a vehicle speed sensor 56, and a crank angle sensor 58 with a rotation speed (engine rotation speed) NE of the direct injection engine 12, a rotation speed (turbine rotation speed) NT of the turbine shaft 16, a rotation speed (output shaft rotation speed, corresponding to a vehicle speed V) NOUT of the output shaft 22, and a pulse signal ϕ indicative of a rotation angle from the TDC (top dead center), i.e., the crank angle CA, of each of the eight cylinders 100, respectively. Various pieces of information necessary for various controls are also supplied. The accelerator operation amount Acc corresponds to an output request amount.

As depicted in Fig. 1, the electronic control device 70 functionally includes a shift control portion 74, an engine stop control portion 76, and an engine start control portion 80. The shift control portion 74 controls the electromagnetic hydraulic control valves, switching valves, etc., disposed in the hydraulic control device 28 to switch the engagement/release state of the plurality of the hydraulic friction engagement devices, thereby switching a plurality of the gear stages of the automatic transmission 20 in accordance with a relationship or a shift map defined in advance by using operation states such as the accelerator operation amount Acc and the vehicle speed V as parameters. This relationship or shift map is empirically obtained in advance such that the shift stage achieving the best fuel consumption or efficiency of the direct injection engine 12 is selected.

The engine stop control portion 76 stops the fuel supply to the direct injection engine 12 and the ignition to stop the rotation of the direct injection engine 12 based on an economic run stop request etc., output at the time of satisfaction of idling reduction conditions such as accelerator-off, zero vehicle speed, D-range, and brake-on.

The engine start control portion 80 performs the ignition start of the direct injection engine 12 in response to an engine restart request due to brake-off while idling is stopped, provides a rotation assist with the starter motor 35 to restart the direct injection engine 12 as needed, and terminates restart control based on that the rotation speed (engine rotation speed) NE of the direct injection engine 12 reaches an autonomous (self-sustaining) operational rotation speed NE1 that is a preset termination determination value NE1. Therefore, the engine start control portion 80 includes a TDC stop determining portion 82, an ignition start control portion 84, and a restart control termination determining portion 86.

The TDC stop determining portion 82 determines whether a stop state is achieved in which the crank angle CA of any cylinder, i.e., a predetermined second cylinder, of the cylinders of the direct injection engine 12 is located at the TDC (top dead center), based on the signal ϕ from the crank angle sensor 58 detecting the crank angle CA of the crankshaft 114 of the direct injection engine 12 from the TDC (top dead center). The TDC determined by the TDC stop determining portion 82 is specifically the compression TDC. For example, if the direct injection engine 12 is stopped with the second cylinder K2 located at the compression TDC, the first cylinder K1 is in the expansion stroke as can be seen from Fig. 4. When the first cylinder K1 is in the expansion stroke, the exhaust valve 108 of the first cylinder K1 is closed, as can be seen from Fig. 4.

The ignition start control portion 84 provides the restart control of the direct injection engine 12 when the direct injection engine 12 is started from a TDC engine stop state that is a stop state of the direct injection engine 12 in which the first cylinder K1 of a plurality of cylinders is in the expansion stroke with the second cylinder K2 located at the compression TDC. Therefore, if the TDC stop determining portion 82 determines that a stop state is achieved in which any cylinder, i.e., the second cylinder K2, of the direct injection engine 12 is located at the compression TDC, the ignition start control portion 84 provides the restart control of the direct injection engine 12 in response to the engine restart request. Specifically, in the restart control of the direct injection engine 12, the ignition start control portion 84 first directly injects fuel into the first cylinder K1 and ignites the fuel in the stop state of the direct injection engine 12 to start the rotation of the direct injection engine 12. In short, the ignition start is performed. When the ignition is caused in the first cylinder K1, an initial explosion (first explosion) occurs. When the initial explosion starts the rotation of the direct injection engine 12 from the TDC engine stop state, in other words, when the direct injection engine 12 is activated, the piston 110 in the second cylinder K2 moves away from the piston position in the TDC engine stop state, i.e., the compression TDC, and enters the first expansion stroke.

After the ignition in the first cylinder K1, while the piston 110 of the second cylinder K2 is moving away from the compression TDC toward a bottom dead center (BDC) in the first expansion stroke in the second cylinder K2 after the start of the engine rotation due to the ignition, the ignition start control portion 84 directly injects fuel into the second cylinder K2 and ignites the fuel. This ignition causes a second explosion in the second cylinder K2 and the engine rotation speed NE is further raised. The timing of fuel injection into the second cylinder K2 in the first expansion stroke is empirically defined in advance as the crank angle CA, for example, and is set to the crank angle CA at which the fuel injected from the fuel injection device 46 is reflected in the concave portion 110b and forms easily-ignited rich air-fuel mixture with the fuel moderately dispersed around the ignition device 47 so as to achieve a good explosion.

In the restart control of the direct injection engine 12, after the activation of the direct injection engine 12, the ignition start control portion 84 directly injects fuel into the third cylinder K3 in the compression stroke of the third cylinder K3 and ignites the fuel in the vicinity of the compression TDC, allowing the ignition to cause a third explosion in the third cylinder K3. Subsequently, the ignition start control portion 84 sequentially performs the fuel injection and ignition in the fourth cylinder K4 or later as is the case with the third cylinder K3 to further raise the engine rotation speed NE.

When the ignition start control portion 84 starts the restart control of the direct injection engine 12, the restart control termination determining portion 86 determines whether the engine rotation speed NE raised by the restart control of the direct injection engine 12 reaches the autonomous operational rotation speed NE1 set in advance to about 400 rpm and whether a change rate (an increase rate, i.e., an increase speed) dNE/dt of the engine rotation speed NE reaches a preset autonomous operational increase speed dNE1/dt. If the engine rotation speed NE reaches the autonomous operational rotation speed NE1 or if the change rate dNE/dt of the engine rotation speed NE reaches the autonomous operational increase speed dNE1/dt, the restart control termination determining portion 86 makes a determination of terminating the restart control of the direct injection engine 12. If the determination of terminating the restart control is made, the ignition start control portion 84 terminates the restart control of the direct injection engine 12. After the termination of the restart control of the direct injection engine 12, another control is provided such as starting the vehicle 10 in accordance with an accelerator pedal operation, for example.

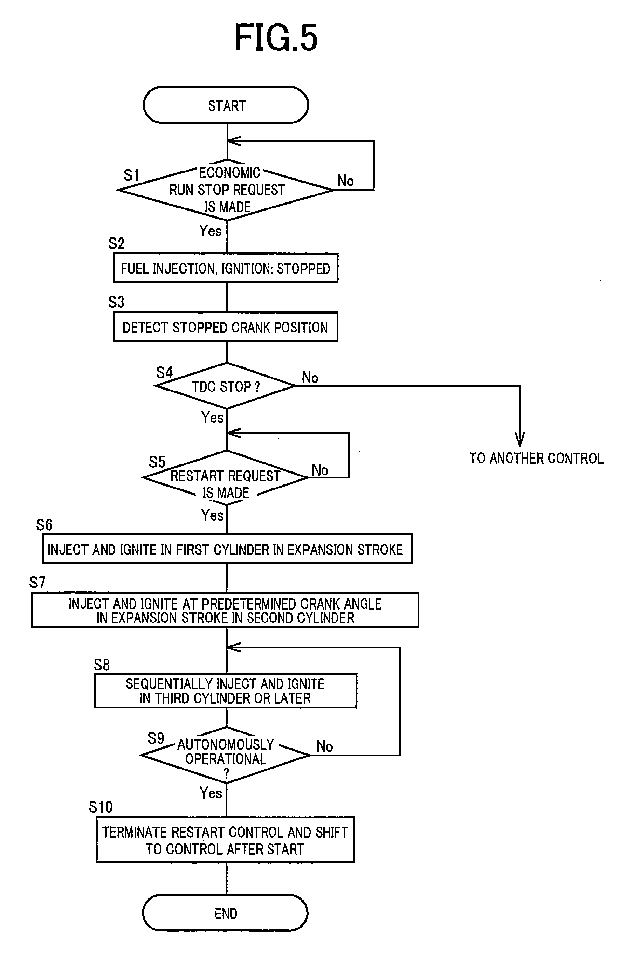

Fig. 5 is a flowchart for explaining a main portion of the control operation of the electronic control device 70, i.e., a control operation of restarting the direct injection engine 12 in response to the engine restart request, and is repeatedly executed with an extremely short cycle time, for example, on the order of a few msec to a few tens of msec. The control operation depicted in Fig. 5 is performed independently or concurrently with another control operation.

In Fig. 5, at steps S1 (hereinafter, step will be omitted) to S2 corresponding to the engine stop control portion 76, the fuel supply to the direct injection engine 12 is terminated to stop the rotation of the direct injection engine 12 based on the economic run stop request etc., output at the time of satisfaction of the idling reduction conditions such as accelerator-off, zero vehicle speed, D-range, and brake-on.

At S3 corresponding to the TDC stop determining portion 82, the crank angle sensor 58 detecting the crank angle CA of the crankshaft 114 of the direct injection engine 12 from the TDC (top dead center) reads a position at which the crankshaft 114 is stopped, i.e., the crank angle CA. It is then determined at S4 corresponding to the TDC stop determining portion 82 whether the crank angle CA of any cylinder of the cylinders of the direct injection engine 12 is located at the TDC (top dead center), or specifically, located at the compression TDC. If the determination of S4 is negative, another control is provided.

However, if the determination of S4 is affirmative, it is determined at S5 whether the engine restart request is made due to brake-off while idling is stopped. If the determination of S5 is negative, S5 is repeatedly executed for standby. However, the engine restart request is made and the determination of S5 is affirmative, at S6, the fuel from the fuel injection device 46 is injected into the first cylinder K1 and ignited by the ignition device 47 in the stop state of the direct injection engine 12, or specifically, the TDC engine stop state, to cause the initial explosion (first explosion). As a result, the direct injection engine 12 starts rotating from the stop state. Subsequently at S7, after the start of rotation of the direct injection engine 12 at S6, fuel is directly injected into the second cylinder K2 and ignited at the predetermined crank angle CA while the piston 110 of the second cylinder K2 is moving away from the compression TDC toward the bottom dead center in the first expansion stroke in the second cylinder K2. This ignition causes the second explosion in the second cylinder K2 and the engine rotation speed NE is further raised.

Subsequently at S8, fuel is directly injected into the third cylinder K3 and ignited to cause the third explosion in the third cylinder K3. The fuel injection and ignition are sequentially performed in the fourth cylinder K4 or later as is the case with the third cylinder K3. As a result, the engine rotation speed NE is further raised.

At S9 corresponding to the restart control termination determining portion 86, it is determined whether the direct injection engine 12 reaches an autonomous (self-sustaining) operational rotation state, based on whether the engine rotation speed NE reaches the preset autonomous operational rotation speed NE1 or whether the change rate (increase speed) dNE/dt of the engine rotation speed NE reaches the preset autonomous operational increase speed dNE1/dt. While the determination of S9 is negative, S8 and S9 are repeatedly executed to continue the fuel injection and ignition in the third cylinder K3 or later in S8. However, if the determination of S9 is affirmative, the fuel injection and ignition in the third cylinder K3 or later executed at S8 are terminated at S10. Therefore, the restart control of the direct injection engine 12 is terminated. S6 to S8 and S 10 described above correspond to the ignition start control portion 84.

As described above, according to this embodiment, when the direct injection engine 12 is started from the TDC engine stop state, in which the first cylinder K1 of the plurality of the cylinders is in the expansion stroke with the second cylinder K2 next to the first cylinder K1 in the ignition order located at the compression TDC, the electronic control device 70 starts the rotation of the direct injection engine 12 and directly injects fuel into the second cylinder K2 and ignites the fuel while the piston 110 of the second cylinder K2 is moving away from the compression TDC toward the bottom dead center in the first expansion stroke in the second cylinder K2 after the start of the rotation. Therefore, at the beginning of the rotation start (at the beginning of activation) when the direct injection engine 12 is started, a negative pressure is reduced in the second cylinder K2 entering the expansion stroke from the compression TDC and a torque rotating the direct injection engine 12 is generated at the same time by the explosion in the second cylinder K2. Therefore, as compared to the case without the fuel injection or ignition in the second cylinder K2 at the beginning of the rotation start, the engine rotation speed NE can rapidly be raised to ensure good startability of the direct injection engine 12. If the fuel injection and ignition are performed at the compression TDC of the second cylinder K2, an ignition failure tends to occur in the second cylinder due to an excessively small volume of the combustion chamber 101 of the second cylinder K2 etc.; however, since the electronic control device 70 performs the fuel injection and ignition while the piston 110 is moving away from the compression TDC toward the bottom dead center, the ignition failure is avoided in the second cylinder K2 and the occurrence of explosion is advantageously facilitated as compared to the fuel injection and ignition at the compression TDC.

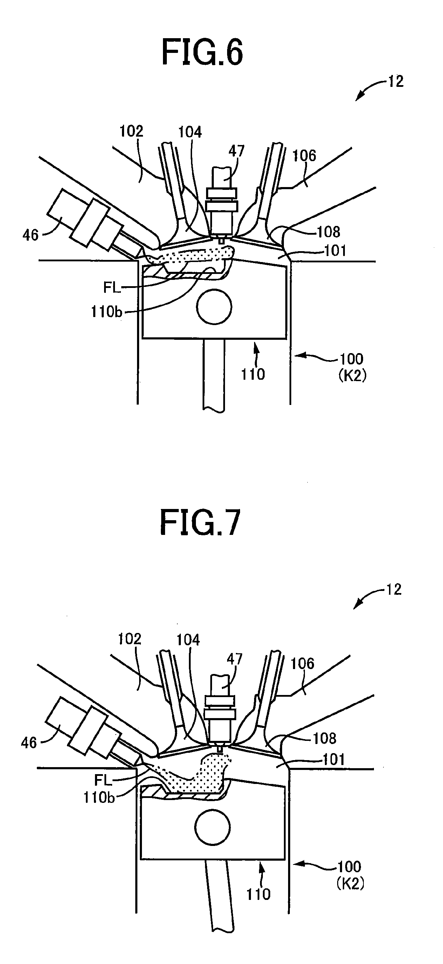

Assuming that the electronic control device 70 performs the fuel injection into the second cylinder K2 in the TDC engine stop state, i.e., at the compression TDC of the second cylinder K2, fuel FL injected from the fuel injection device 46 collides with a peripheral edge portion of the piston top portion 110a as depicted in Fig. 6, resulting in poor dispersion of the fuel FL. Therefore, the ignition failure tends to occur in the second cylinder K2. However, the electronic control device 70 of this embodiment does not perform the fuel injection into the second cylinder K2 at the compression TDC of the second cylinder K2 and injects the fuel FL into the second cylinder K2 while the piston 110 of the second cylinder K2 is moving away from the compression TDC toward the bottom dead center in the first expansion stroke. For example, the fuel FL is injected into the second cylinder K2 in early phase of the first expansion stroke. As a result, as depicted in Fig. 7, the fuel FL injected from the fuel injection device 46 is reflected in the concave portion 110b and forms easily-ignited rich air-fuel mixture with the fuel FL moderately dispersed around the ignition device 47. Therefore, the restart control of the direct injection engine 12 in this embodiment avoids the ignition failure in the second cylinder K2 and facilitates the occurrence of explosion in terms of the dispersion of the fuel FL.

According to this embodiment, as depicted in Fig. 7, the fuel injection into the second cylinder K2 is performed toward the concave portion 110b of the piston 110. Therefore, since the concave portion 110b can be utilized to form easily-ignited rich air-fuel mixture around the ignition device 47 with the injected fuel FL moderately dispersed, the ignition failure is avoided in the second cylinder K2 and the occurrence of explosion is facilitated as compared to the case of employing a piston without the concave portion 110b.

According to this embodiment, the electronic control device 70 directly injects fuel into the first cylinder K1 and ignites the fuel in the TDC engine stop state, thereby starting the rotation of the direct injection engine 12. Therefore, the direct injection engine 12 can be started without using the starter motor 35. Alternatively, even when the starter motor 35 is used together, the electric power consumption of the starter motor 35 can be reduced.

Although the embodiment of the present invention has been described in detail with reference to the drawings, the present invention is applied in other forms.

For example, although the direct injection engine 12 is a V-type engine in the embodiment, the direct injection engine 12 may be an engine of another type such as a straight engine and a horizontally opposed engine.

In the embodiment, in the restart control of the direct injection engine 12, the ignition start control portion 84 directly injects fuel into the first cylinder K1 and ignites the fuel in the TDC engine stop state, thereby starting the rotation of the direct injection engine 12; however, the rotation of the direct injection engine 12 may be started by the starter motor 35 without the fuel injection and ignition in the first cylinder K1. In such a case, an explosion in the second cylinder K2 corresponds to the initial explosion. The explosion in the second cylinder K2 can reduce rotation resistance of the direct injection engine 12, thereby suppressing the power consumption of the starter motor 35.

Although the direct injection engine 12 is an eight-cylinder engine in the embodiment, the direct injection engine 12 may be any engine including a plurality of cylinders equal to or greater than seven cylinders as long as the engine is a typical engine in which the exhaust valve 108 starts opening after 140 degrees ATDC to terminate the expansion stroke. In the case of such a four-cycle direct injection engine with seven or more cylinders, for example, a direct injection engine with 8 cylinders, 12 cylinders, etc., when the direct injection engine 12 is started while the predetermined cylinder, i.e., the second cylinder K2 is at the compression TDC, the first cylinder K1 in the expansion stroke exists that precedes the second cylinder K2 in the ignition order. Therefore, by directly injecting fuel into the first cylinder K1 and igniting the fuel in the TDC engine stop state, the engine rotation can be launched to start the direct injection engine 12.

Although the restart control of the direct injection engine 12 is provided in response to the engine restart request in the embodiment, the restart control may include the fuel injection in the second cylinder K2 performed before the fuel injection in the third cylinder K3 or may include the fuel injection in the third cylinder K3 performed before the fuel injection in the second cylinder K2. Alternatively, the both fuel injections may be performed at the same time.

Although the fuel used with the direct injection engine 12 is gasoline in the embodiment, the fuel may be ethanol or mixed fuel of ethanol and gasoline or may be hydrogen, LPG, etc.

Although the concave portion 110b is formed in the piston 110 of the direct injection engine 12 in the embodiment, the concave portion 110b is not essential. Even when the piston 110 does not include the concave portion 110b, if fuel is directly injected into the second cylinder K2 and ignited while the piston 110 of the second cylinder K2 is moving away from the compression TDC toward the bottom dead center in the first expansion stroke in the restart control of the direct injection engine 12, the ignition failure due to an excessively small volume of the combustion chamber 101 of the second cylinder K2 etc., can be suppressed as compared to the case that the fuel injection and ignition are performed at the compression TDC of the second cylinder K2. The improvement in ignitability in the second cylinder K2 can reduce the rotation resistance of the direct injection engine 12 due to a negative pressure in the second cylinder K2 in the first expansion stroke.

Although the vehicle 10 does not include an electric motor as a drive power source for running in the embodiment, the vehicle 10 may be a hybrid vehicle including an electric motor for running.

Although the vehicle 10 includes the torque converter 14 between the direct injection engine 12 and the automatic transmission 20 in the embodiment, the torque converter 14 may not necessarily be disposed. The C1 clutch 18 acting as the input clutch of the automatic transmission 20 may be housed in the automatic transmission 20 to make up one of a plurality of the friction engagement devices for achieving the shift stages.

Although the automatic transmission 20 of the vehicle 10 in the embodiment is a planetary gear type stepped transmission, the automatic transmission 20 may be a belt type continuously variable transmission or may not necessarily be disposed.

The described embodiment is merely an embodiment of the present invention and the present invention can be implemented in variously modified and improved forms based on the knowledge of those skilled in the art without departing from the spirit thereof.

### NOMENCLATURE OF ELEMENTS

10: vehicle
12: direct injection engine
70: electronic control device (vehicle engine start control device)
100: cylinder
101: combustion chamber
110: piston
110a: piston top portion
110b: concave portion
K1: first cylinder
K2: second cylinder

## Claims

1. A vehicle engine start control device in a vehicle including a direct injection engine directly injecting fuel into a cylinder as a drive power source for running, wherein
when the direct injection engine is started from a stop state of the direct injection engine in which a first cylinder of a plurality of cylinders is in an expansion stroke while a second cylinder next to the first cylinder in an ignition order is located at a top dead center, rotation of the direct injection engine is started, and while a piston of the second cylinder is moving away from the top dead center toward a bottom dead center in a first expansion stroke in the second cylinder after the start of the rotation, fuel is directly injected into the second cylinder and ignited.

2. The vehicle engine start control device of claim 1, wherein
each piston included in the direct injection engine includes a concave portion opened toward a combustion chamber in a piston top portion, and wherein
the fuel is injected into the second cylinder toward the concave portion.

3. The vehicle engine start control device of claim 1 or 2, wherein
the rotation of the direct injection engine is started by directly injecting fuel into the first cylinder and igniting the fuel in a stop state of the direct injection engine.

4. The vehicle engine start control device of any one of claims 1 to 3, wherein
the direct injection engine has a plurality of cylinders equal to or greater than seven cylinders.
